# EUROPEAN PATENT SPECIFICATION

(11) **EP 2 759 528 B1**
(45) Date of publication and mention of the grant of the patent: **08.06.2016**
(21) Application number: 13152869.7
(22) Date of filing: 28.01.2013
(51) Int. Cl.: C04B 41/63

(54) **Method for treating cement, concrete, mortar or floor screed**
Verfahren zur Behandlung von Zement, Beton, Mörtel oder Fußbodenestrich
Procédé de traitement de ciment, béton, mortier ou chape de sol

(43) Date of publication of application: 30.07.2014
(73) Proprietor: SHARK Solutions A/S, 4390 Vipperod (DK)
(72) Inventor: Holmegaard, Jens, 4520 Svinninge (DK)
(74) Representative: Nielsen, Leif

(56) References cited:
- US-A- 4 792 464
- DATABASE WPI Week 198945 Thomson Scientific, London, GB; AN 1989-330782 XP002699083, & SU 1 454 813 A (KALUGA HALURGY RESE) 30 January 1989 (1989-01-30)

## Description

### Field of the Invention

The present invention relates to dust binder and/or primer composition for cement, concrete, mortar or floor screed comprising dispersed particles of polyvinyl butyral (PVB).

In addition, the present invention relates to a method for treating surfaces of cement, concrete, mortar or floor screed for improving abrasion resistance (binding dust) of such surfaces and use of a composition comprising dispersed particles of polyvinyl butyral (PVB) for treating surfaces of cement, concrete, mortar, floor screed.

### Background of the Invention

Surfaces of materials such as cement, concrete, mortar or floor screed or the like materials are sometimes left untreated in a building, e.g. in cellars, in car parking houses, storage facilities, workshops or in case the architect wishes to give the building (or parts thereof) an impression of a "raw" look. Such untreated surfaces are often stained by various materials e.g .oil, grease, coffee, paint etc. e.g. when dropped on the floor or splashed on a wall by accident. These stains are not easily removed. In addition, an untreated surface of cement, concrete, mortar or floor screed or the like materials are less resistant to wear and may then create dust of cement/concret/mortar/floor screed when the surface is subjected to wear.

Otherwise the surfaces may be coated with one or more layers of standard coatings for cement, concrete, mortar or floor screed or the like materials, such as coatings based on epoxy, polyurethane (PU) or the like in order to obtain surfaces which are more resistant to wear and staining. These prior art coatings are partly absorbed into cement, concrete, mortar or floor screed or the like materials and the treated surfaces obtain a dark and sometimes even unpleasant look. Floor screed materials treated with a standard PU coating typically obtain a reduced tensile strength of the surface due to the elastic nature of PU based coatings.

SU 1454813 A describes the use of a coating comprising a polyalumino organisiloxane, Poly vinyl butyral and an unsaturated polyester resin for impregnating ferroconcrete constructions exposed to corrosive MgCl₂ containing liquids.

US 4792464 A describes a peelable flexible coating for application on metal surfaces, comprising an aqueous dispersion of a polymer based on a PVB and a plasticizer additive.

Poly vinyl butyral (PVB) has been manufactured since the 1930 and is, since it is very expensive, mainly used as laminating material in non-shatterable automotive or architectural glass. PVB is non toxic and is not dissolvable in water, but is soluble in organic solvents such as alcohols, esters, ketones. PVB is an expensive material and use of PVB has thus been limited to special applications, e.g. as laminating material for non-shatterable glass or windshields. PVB used in wind shields and/or similar non-shatterable glass is recovered in a process in which glass is crushed and the laminate layer of PVB is separated from the glass. The recycled PVB can be used as an additive in coatings, adhesives etc. on textiles, metals etc. or as a peelable flexible coating on various articles.

### Object of the Invention

It is an object of the invention to provide treatments of surfaces of cement, concrete, mortar or floor screed in order to improve the tensile strength of the surfaces in order to reduce creation of dust (i.e. binding dust) during wear on surfaces of cement, concrete, mortar or floor screed.

Further, it is an object to provide a treatment of cement, concrete, mortar or floor screed which leaves an impression of a raw, untreated surface while protecting the surfaces form staining.

In addition, there is a need to provide a surface treatment of cement, concrete, mortar or floor screed which reduces the overall consumption of conventional coatings. In addition, there is a need to provide a surface treatment of such materials which provides improved adhesion of conventional top coatings while simultaneously providing a brighter surface on the treated surfaces of cement, concrete, mortar or floor screed.

There is also still a need for providing alternative compositions comprising recycled PVB and alternative uses of recycled PVB.

### Description of the Invention

The objects mentioned above are achieved with a method for treating surfaces of cement, concrete, mortar or floor screed comprising applying at least one layer of a composition comprising of 2-20% by weight of particles of plasticized polyvinyl butyral (PVB) dispersed in water in an amount of 100 g/m²-600 g/m² or corresponding to an amount of plasticized PVB of 2-120 g/m². This new and surprising method ensures that the surfaces exhibit improved resistance to wear, which results in reduced creation of dust during wear, i.e. a dust binding effect is achieved. In addition, the surface PVB layer applied protecting the surfaces from being stained, e.g. by oily substances. In addition, further effects obtained are e.g. a reduction of capillary water absorption into the materials; improved resistance to frost and de-icing salts; reduced chloride ion ingress and penetration in the concrete materials; reduced efflorescence (due to PH value > 9,5); reduced dirt penetration into the pores of the materials; improved thermal insulation; can be overcoated with other dispersion coatings or top coats. In addition, the cement, concrete, mortar or floor screed treated with the composition demonstrates higher durability and resistance to e.g. wear than conventional silane treatments. In a preferred embodiment of the method, the composition comprises 6-18 % by weight or preferably 9-16 % by weight, corresponding to an amount of plasticized PVB of 6-108 g/m² or preferably 9-96 g/m², and preferably 10-14% by weight of particles of plasticized polyvinyl butyral (PVB), corresponding to an amount of plasticized PVB of 10-84 g/m², in order to obtain a uniform layer in a single application and providing the optimum anti staining and/or dust binding effect of the composition while also providing reasonable costs. A particularly preferred embodiment of the method uses a dispersion having a PVB solids content of 12% by weight, a density of 1,01 kg/l, pH of approximately 9 and a brookefield viscosity of 100-200 mPas at room temperature (20-25 °C).

The composition for priming and/or binding of dust on cement, concrete, mortar or floor screed comprises 2-20% by weight of particles of polyvinyl butyral (PVB) dispersed in water, wherein the PVB contains 15-30% of plasticizer. The composition is thus especially suitable for applying to surfaces of buildings, e.g. floors, walls or ceilings or discrete articles made of cement, concrete, mortar, floor screed or similar materials such as slabs, roof tiles or pavement slabs or statues or the like for obtaining improved staining resistance and/or improved resistance to wear, i.e. a dust binding effect. In addition, further effects obtained are e.g. a reduction of capillary water absorption into the materials; improved resistance to frost and de-icing salts; reduced chloride ion ingress and penetration in the concrete materials; reduced efflorescence (due to PH value > 9,5); reduced dirt penetration into the pores of the materials; improved thermal insulation; the treated surface can be overcoated with other dispersion coatings or top coats. In addition, the cement, concrete, mortar or floor screed treated with the composition demonstrates higher durability and resistance to e.g. wear than conventional silane treatments. Similarly the composition can substitute conventional hydrophobic impregnation compositions based on e.g .silanes or siloxanes, and provide alternative and non toxic compositions for hydrophobic impregnation.

The composition comprises 6-18 % by weight, preferably 9-16 % by weight, and more preferred 10-14% by weight of particles of polyvinyl butyral (PVB) in order to obtain a uniform layer in a single application and providing the optimum anti staining and/or dust binding effect of the composition while also providing reasonable costs. A particularly preferred embodiment of the composition is an aqueous dispersion having a PVB solids content of 12% by weight, a density of 1,01 kg/l, pH of approximately 9 and a brookefield viscosity of 100-200 mPas at room temperature (20-25 °C).

The plasticizer contained in the PVB particles is believed to render it possible to create a stable aqueous dispersion of the PVB particles. Suitable plasticizers are plasticizers, other than phthalates, used conventionally used in PVB polymer compositions, such as tri- or tetraethylene glycol diesters of carboxylic acids, butylricinoleate, castor oil or blends of conventional PVB plasticizers.

The PVB particles are made of recycled plasticized PVB in order to provide an alternative use of recycled PVB and at the same time reduce the costs per m² for treating the surfaces of cement, concrete, mortar or floor screed. Recycled PVB is preferably obtained from working up non-shatterable glass laminates, e.g. automotive or architectural non-shatterable glass, and isolating the plasticized PVB used in the laminated glass.

The average size of the PVB particles is preferably 1-100 µm, more preferably 1-50 µm and most preferred 1- 15µm in order to ensure a stable aqueous dispersion and in order to ensure a uniform layer of PVB on the surfaces of cement, concrete, mortar or floor screed. In addition, it is believed, that small particles of the PVB particles are able to enter the pores of the surfaces of cement, concrete, mortar or floor screed and provide an even further improved staining resistance and improved resistance to wear, i.e. also a dust binding effect.

Further, the application of a dilute aqueous PVB dispersion provides improved adhesion of conventional top coatings, such as epoxy, acrylic or polyurethane (PU) based resins while simultaneously providing a brighter surface on the treated surfaces of cement, concrete, mortar or floor screed when compared to applying conventional coatings based on e.g. PU, acrylic or epoxy directly to the surfaces of cement, concrete, mortar or floor screed. In addition, when, the dilute PVB dispersion is applied as a primer prior to application of the conventional top coats, it results in a significant reduction of up to 50% -70% in overall consumption of the amount of top coat applied to obtain a uniform treated surface on such materials.

The aqueous PVB dispersion is applied to the surfaces by conventional methods, e.g. by brushes, rollers, rubber squeegees or by spraying.

In a preferred embodiment, the method comprises applying the PVB layer in an amount of 150 g/m²- 500 g/m² corresponding to an amount of plasticized PVB of 3.5-100 g/m², or preferably 200 g/m²- 400 g/m² of the aqueous PVB dispersion, corresponding to an amount of plasticized PVB of 4-80 g/m² or 20-48 g/m² of a composition containing 10-14 % by weight of plasticized PVB, which provides a uniform layer of PVB a uniform layer on the surface in a single application while also providing the optimum anti staining and/or dust binding effect of the composition. In addition, it results in reasonably low costs. In order to reduce costs even further, the particles of plasticized PVB are made of recycled plasticized PVB.

The aqueous PVB dispersion composition may also be used as a primer for surfaces of cement, concrete, mortar or floor screed prior to applying one or more layers of a top coat composition, since it provides a unique pretreated surface onto which conventional top layers adhere strongly. Suitable top coating compositions are conventional systems for surfaces of concrete etc. such as coatings based on epoxy, polyurethane (PU) or the like in order to obtain surfaces which are even more resistant to wear and staining. The thickness of the top coating can be reduced by up to 50-70% without compromising resistance to wear or anti-staining effects of the top coat compositions. S suitable topcoats are e.g. StoPur WV 150, a silk mat PU coating produced by STOCretec or StoPur WV 100, a shiny PU coating, also produced by STOCretec. Another unforeseen effect of using the aqueous PVB dispersion composition as a primer according to the present invention is that deterioration of the original colour of the surface of cement, concrete, mortar or floor screed etc. is significantly reduced.

The present invention thus also relates to use of a composition comprising 2-20% by weight of particles of plasticized polyvinyl butyral (PVB) dispersed in water for increasing resistance to wear, binding dust and/or increasing adhesion of topcoats and/or increasing resistance to wear on surfaces of cement, concrete, mortar or floor screed. The surface is preferably a part of a building, such as floors, walls or ceilings. In a preferred embodiment of the use, the composition comprises 6-18 % by weight or more preferred 10-14% by weight of particles of polyvinyl butyral (PVB) in order to obtain a uniform layer in a single application and providing the optimum anti staining and/or dust binding effect of the composition while also providing reasonable costs.

Similar effects are also obtained when the aqueous PVB dispersion is applied to discrete articles such as slabs, roof tiles or pavement slabs or statues or similar items made of cement, concrete, mortar or floor screed or stone such as marble, granite etc. Roof tiles of concrete may e.g. be primed using the aqueous PVB dispersion prior to applying the conventional one or two layers of a coating based on acrylic resins. The consumption of the acrylic top coating can then be reduced with up to 50-70 %.

### Description of the Drawing

The present invention will be described in detail using the figures in which
- Fig. 1a: shows an untreated reference slab marked T.J.ref of example 1 before subjected to wear,
- Fig. 1b: shows an untreated reference slab marked T.J.ref of example 1 after being subjected to wear,
- Fig. 1c: shows slab T.J.2 treated with the dilute aqueous PVB dispersion of example 1 1 before subjected to wear,
- Fig. 1d: shows slab T.J.2 treated with the dilute aqueous PVB dispersion of example 1 1 after being subjected to wear,
- Fig. 1e: shows slab T.J.3 treated with the dilute aqueous PVB dispersion of example 1 before subjected to wear,
- Fig. 1f: shows slab T.J.3 treated with the dilute aqueous PVB dispersion of example 1 after being subjected to wear,
- Fig 2a: shows a slab of floor screed, treated with the aqueous PVB dispersion of example 2 on one half and with conventional PU coating on the other half,
- Fig 2b: shows two slabs of a fibre based cement, the lower coated with the aqueous PVB dispersion used in example 1 and a conventional PU coating, the upper is coated with two layers of a conventional PU coating, and

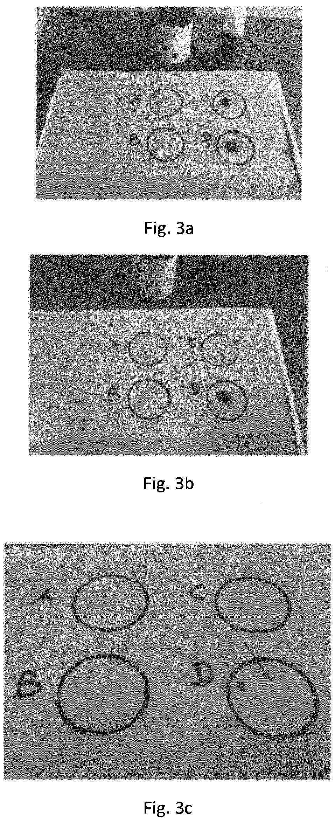

- Fig. 3a-c: shows an oil staining test on a concrete slab treated with the dilute aqueous PVB dispersion of example 1.

### Detailed Description of the Invention

### Example 1:

Use of an aqueous dilute PVB dispersion as dust binder and/or a primer/pre-treatment agent was tested on concrete slabs using the test method according to DS/EN 13892-5:2003, Methods of test for screed materials - Part 5: Determination of wear resistance to rolling wheel of screed material for wearing layer.

### The dispersion

An aqueous dispersion of PVB particles having an average particle size of 20 µm was prepared. The PVB particles are obtained from reclaimed PVB from Glass-PVB laminates, e.g. from disposed automobile windshields. The recycled PVB is shredded and comminuted into small particles having a mean particles size of 20 µm. The recycled PVB contains conventional plasticizers (other than phthalates) in an average amount of 20-25% by weight. The particulated PVB is dispersed in water resulting in a dispersion having a solids content of approximately 48% by weight, a density of 1.029kg/l, pH of approximately 9 and a brookefield viscosity of < 600 mPas at room temperature (20-25 °C). This "concentrated" dispersion is diluted using 1 part PVB dispersion and 3 parts of water before application resulting in a dispersion having a PVB solids content of 12% by weight, a density of 1,01 kg/l, pH of approximately 9 and a brookefield viscosity of 100-200 mPas at room temperature (20-25 °C).

### Concrete slabs

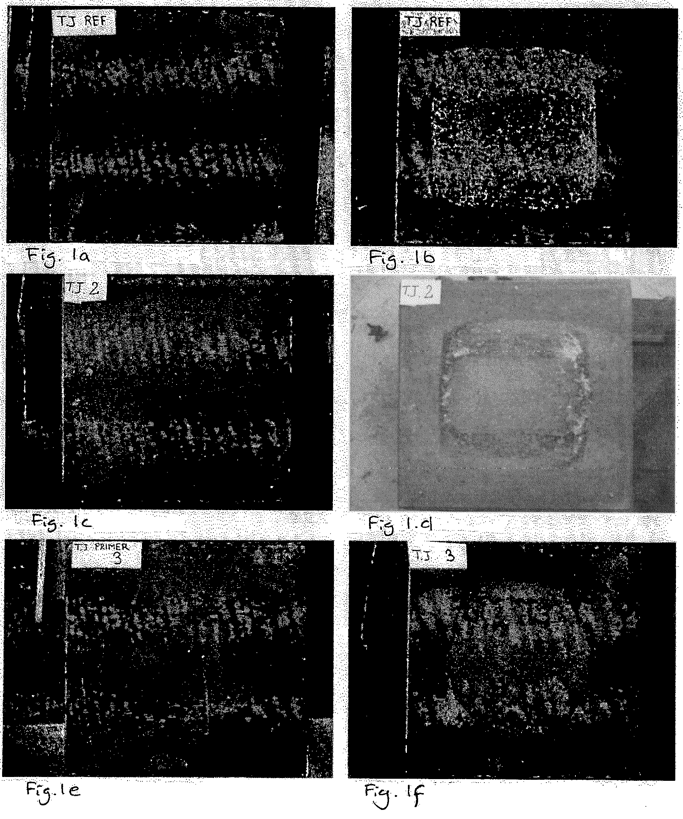

Three standard concrete slabs (size: 50cm x 50cm) were used. The first concrete slab shown in fig. 1a marked T.J.ref was an untreated reference slab. The slabs marked T.J. 2 (fig. 1c) and T.J.3 (fig. 1e) were treated with the dilute aqueous PVB dispersion with an amount as indicated in table 1 below.

The slabs were subjected to wear as described in DS/EN 13892-5:2003 Methods of test for screed materials - Part 5: Determination of wear resistance to rolling wheel of screed material for wearing layer. This European Standard specifies a method for determining the wear resistance to a heavily loaded rolling wheel on moulded mortar specimens made from cementitious screed material or synthetic resin screed material or optionally for other screed materials intended for wearing surface.

The slabs were subjected to the rolling wheel for 10 000 times intermittently during a week and the depth of wear (µm) was measured at 15 points on each slab. The mean depth of wear (µm) was calculated for each slab. In addition, the volume of material worn of during roller wear test (cm³) was collected and the total amount of material worn off was calculated for each slab. The results are listed in table 1. Fig. 1b shows the wear on the untreated reference slab (T.J. ref); fig. 1d shows the wear on the treated slab marked T.J.2 and fig. 1e shows the wear on the treated slab marked T.J.3.

The details of the wear tests are shown in the table:

**Table 1: Results of wear in heavy roller wear test**

| Test | Ref | T.J. 2 | T.J.3 |
|---|---|---|---|
| Dispersion applied in g | 0 | 78 | 81 |
| Dispersion applied in g/m² | 0 | 312 | 324 |
| d: mean depth of wear (µm) | 1858 | 147 | 131 |
| RWA: volume of material worn of during roller wear test (cm³) | 204 | 16 | 14 |

### Conclusion on test:

As can be seen in table 1 and figs. 1a-1e the concrete slabs treated with the aqueous PVB dispersion showed significantly less abrasion wear in the roller test when compared to the untreated slabs and resulted in a very low volume of material worn off during the roller test. The results demonstrate that the dilute aqueous PVB dispersion is highly suitable for use as a primer and/or dust binder on concrete surfaces and similar surfaces subjected to daily wear.

### Example 2:

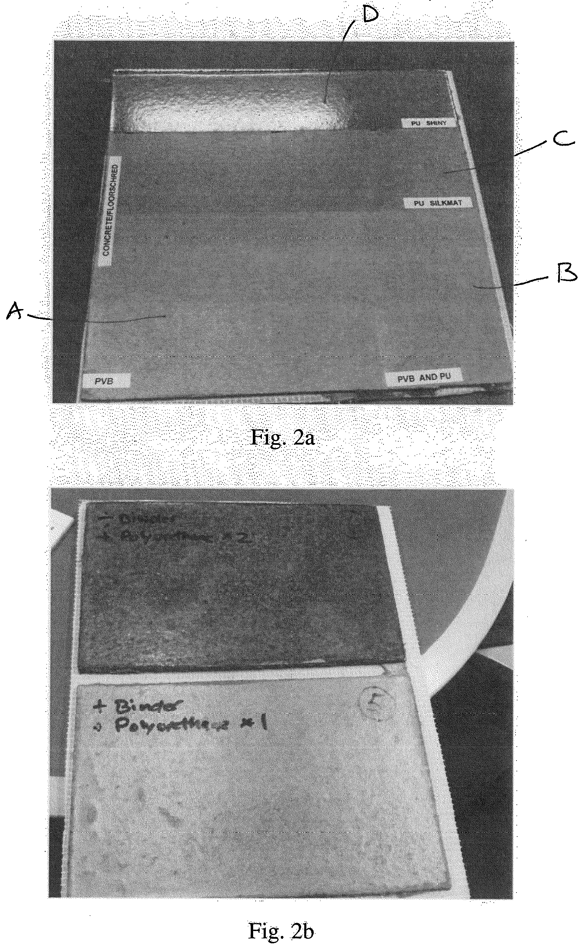

A slab of conventional floor screed was cast from an aluminate cement, StoCrete CS 730 marketed by STO. The aqueous PVB dispersion used in example 1 was applied by roller on one half of the dried slab, i.e. in the areas marked A and B in fig. 2a in an amount of approximately 320 g /m². To the other half of the slab, i.e. in the areas marked C and D in fig. 2a. a conventional silk mat PU coating, StoPur WV 150 marketed by StoCretec was applied by roller as a first coating layer. In the area marked D in fig. 2a shiny PU coating (StoPur WV 100 marketed by StoCretec) was applied by roller on top of the silk mat PU coating resulting in a total of 200 g/m² PU coating.
A layer of the silk mat PU coating was also applied on a part (field B of fig. 2a) of the surface treated with the aqueous PVB dispersion in an amount of 70 g/m².

The area marked A (PVB only) looks similar almost identical to the surface of the floor screed before application of the coating.

The area marked B, treated with the dilute aqueous PVB dispersion and the silk mat PU top coat, demonstrates a significantly lighter colour compared to areas C and D.

Fig. 2b shows two slabs cast of fibre cement StoCrete CS 735 marketed by STO. The upper slab was coated with two layers of a conventional shiny PU coating (StoPur WV 100 marketed by StoCretec) which was applied by roller in a total amount of 350 g /m². The aqueous PVB dispersion used in example 1 and above was applied by roller to the lower slab in an amount of approximately 320 g/m² followed by a single layer of the conventional shiny PU coating used on the upper slab in an amount of 120 g /m². Both slabs demonstrated uniformly coated surfaces. The lower slab (treated with the dilute aqueous PVB dispersion and the PU top coat), demonstrates a significantly lighter colour compared to the upper slab (treated with two layers of PU coating) and the consumption of PU top coat is reduced by 65 % while a satisfactory surface coating was obtained.

In conclusion, when, the dilute PVB dispersion is applied as a primer prior to application of the conventional top coats, it results in a significant reduction of up to 50%-70% in overall consumption of the amount of top coat applied to obtain a uniform treated surface on different materials such as floor creed and fibre cement. Further, it is concluded, that this effect will also be seen on similar building materials such as cement, concrete, mortar or floor screed or similar materials.

### Example 3:

A concrete slab (50x50 cm) treated with the aqueous PVB dispersion used in example 1 was tested for oil staining.

The aqueous PVB dispersion used in example 1 was applied by roller on the concrete slab, in an amount of approximately 250-300 g /m².

In the areas A and B, a conventional food grade rape seed oil (yellow; sold under the name : "Egeskov koldpresset rapsolie") was applied to the concrete surface, and in the areas C and D a conventional two-stroke- engine oil (Blue; unknown brand). After 30 minutes the oil in the areas A and C was wiped of with a paper towel, and after 1 hour the areas B and D the oil in the areas A and C was wiped of with a paper towel. All areas show no staining from the oil, except in area D where two small pinholes (marked by arrows) were stained blue by the engine oil.

The pinholes indicate areas where the coating with the PVB dispersion on the concrete slab is missing. The oils will absorb into the surface of an untreated concrete slab in a similar way as in the pinholes and stain the concrete surface.

This example clearly shows that the treatment with the aqueous dispersion of plasticized PVB result in anti-staining effect on the surface of concrete materials.

## Claims

1. A method for treating surfaces of cement, concrete, mortar or floor screed comprising applying at least one layer of a composition comprising of 2-20% by weight of particles of plasticized polyvinyl butyral (PVB) dispersed in water in an amount of 100 g/m²-600 g/m².

2. A method according to claim 1 wherein the composition comprises 6-18% by weight, preferably 9-16 % by weight, or more preferred 10-14% by weight of particles of plasticized polyvinyl butyral (PVB).

3. A method according to claim 1 or 2 comprising applying the layer in an amount of 150 g/m²-500 g/m² or preferably 200 g/m²-400 g/m².

4. A method according to any of the claims 1-3 wherein the particles of plasticized PVB are made of recycled plasticized PVB.

5. A method according to any of the claims -1-4 comprising applying at least one layer of a top coat composition.

6. Use of a composition comprising 2-20% by weight of particles of plasticized polyvinyl butyral (PVB) dispersed in water for binding of dust and/or increasing adhesion of topcoats and/or increasing resistance to wear on surfaces of cement, concrete, mortar or floor screed.

7. Use according to claim 6 wherein the surface is a part of a building, such as floors, walls or ceilings.

8. Use according to claim 6 wherein the surface to be treated is on a discrete article such as slabs, roof tiles or pavement slabs or statues.

9. Use according to any of the claims 6-8 wherein the PVB particles are made of recycled plasticized PVB.

## Patentansprüche

1. Verfahren zum Behandeln von Zement-, Beton-, Mörtel- oder Estrichoberflächen, umfassend Aufbringen mindestens einer Schicht aus einer Zusammensetzung, umfassend 2 - 20 Gewichts-% Partikel aus in Wasser dispergiertem Weich-Polyvinylbutyral (PVB) in einer Menge von 100 g/m² - 600 g/m².

2. Verfahren nach Anspruch 1, wobei die Zusammensetzung 6 - 18 Gewichts-%, vorzugsweise 9 - 16 Gewichts-% oder mehr bevorzugt 10 - 14 Gewichts-% Partikel aus Weich-Polyvinylbutyral (PVB) umfasst.

3. Verfahren nach Anspruch 1 oder 2, umfassend Aufbringen der Schicht in einer Menge von 150 g/m² - 500 g/m² oder vorzugsweise 200 g/m² - 400 g/m².

4. Verfahren nach einem der Ansprüche 1 - 3, wobei die Weich-PVB-Partikel aus wiederverwertetem Weich-PVB hergestellt sind.

5. Verfahren nach einem der Ansprüche 1 - 4, umfassend Aufbringen mindestens einer Schicht aus einer Deckschichtzusammensetzung.

6. Verwendung einer Zusammensetzung, umfassend 2 - 20 Gewichts-% Partikel aus in Wasser dispergiertem Weich-Polyvinylbutyral (PVB) zum Binden von Staub und/oder Erhöhen von Haftvermögen von Deckschichten und/oder Erhöhen von Verschleißfestigkeit auf Zement-, Beton-, Mörtel- oder Estrichoberflächen.

7. Verwendung nach Anspruch 6, wobei die Oberfläche ein Teil eines Gebäudes wie Böden, Wände oder Decken ist.

8. Verwendung nach Anspruch 6, wobei sich die zu behandelnde Oberfläche auf einem gesonderten Gegenstand wie Steinplatten, Dachziegeln oder Pflasterplatten befindet.

9. Verwendung nach einem der Ansprüche 6 - 8, wobei die PVB-Partikel aus wiederverwertetem Weich-PVB hergestellt sind.

## Revendications

1. Procédé de traitement de surfaces de ciment, de béton, de mortier ou de chape de sol comprenant l'application d'au moins une couche d'une composition comprenant 2 à 20 % en poids de particules de polyvinylbutyral (PVB) plastifié dispersées dans de l'eau, en une quantité de 100 g/m² à 600 g/m².

2. Procédé selon la revendication 1, dans lequel la composition comprend 6 à 18 % en poids, de préférence 9 à 16 % en poids, ou de manière davantage préférée de 10 à 14 % en poids, de particules de polyvinylbutyral (PVB) plastifié.

3. Procédé selon la revendication 1 ou 2, comprenant l'application de la couche en une quantité de 150 g/m² à 500 g/m² ou de préférence de 200 g/m² à 400 g/m².

4. Procédé selon l'une quelconque des revendications 1 à 3, dans lequel les particules de PVB plastifié sont faites de PVB plastifié recyclé.

5. Procédé selon l'une quelconque des revendications 1 à 4, comprenant l'application d'au moins une couche d'une composition de couche de dessus.

6. Utilisation d'une composition comprenant 2 à 20 % en poids de particules de polyvinylbutyral (PVB) plastifié dispersées dans de l'eau, pour lier la poussière et/ou pour augmenter l'adhésion des couches de dessus et/ou pour augmenter la résistance à l'usure sur des surfaces de ciment, de béton, de mortier ou de chape de sol.

7. Utilisation selon la revendication 6, dans laquelle la surface est une partie d'un immeuble, telle que les sols, les murs ou les plafonds.

8. Utilisation selon la revendication 6, dans laquelle la surface à traiter est sur un article unique tel que des dalles, des tuiles de toit des dalles de chaussée ou des statues.

9. Utilisation selon l'une quelconque des revendications 6 à 8, dans laquelle les particules de PVB sont faites de PVB plastifié recyclé.
